# EUROPÄISCHE PATENTSCHRIFT

(11) **EP 3 096 434 B1**
(45) Veröffentlichungstag und Bekanntmachung des Hinweises auf die Patenterteilung: **16.08.2017**
(21) Anmeldenummer: 15168264.8
(22) Anmeldetag: 19.05.2015
(51) Int. Cl.: H02J 9/06

(54) **BETRIEB EINES LOKALEN WECHSELSTROMNETZES MIT EINEM GENSET UND EINER USV**
OPERATION OF A LOCAL ALTERNATING CURRENT NETWORK WITH A GENSET AND A UPS
FONCTIONNEMENT D'UN RÉSEAU À COURANT ALTERNATIF LOCAL À L'AIDE D'UN GROUPE ÉLECTROGÈNE ET D'UNE ALIMENTATION SANS COUPURE

(43) Veröffentlichungstag der Anmeldung: 23.11.2016
(73) Patentinhaber: Piller Group GmbH, 37520 Osterode am Harz (DE)
(72) Erfinder: Herbener, Frank, 37539 Bad Grund (DE)
(74) Vertreter: REHBERG HÜPPE + PARTNER

(56) Entgegenhaltungen:
- WO-A2-2008/135549

## Beschreibung

### TECHNISCHES GEBIET DER ERFINDUNG

Die Erfindung bezieht sich auf ein Verfahren zum Betrieb eines lokalen Wechselstromnetzes mit einem Genset, das eine Brennkraftmaschine und einen Generator umfasst, und einer unterbrechungsfreien Stromversorgung (USV), die einen Energiespeicher umfasst, wobei das Verfahren die Merkmale des Oberbegriffs des unabhängigen Patentanspruchs 1 aufweist. Weiterhin betrifft die Erfindung eine USV zur Durchführung eines solchen Verfahrens mit einem Energiespeicher, einer Steuerung und den weiteren Merkmalen des Oberbegriffs des Vorrichtungsanspruchs 8. Die Erfindung bezieht sich nicht darauf, mit Hilfe der USV die Zeit zu überbrücken, die zum Anfahren der Brennkraftmaschine des Gensets benötigt wird. Ein solches Verfahren zum Anfahren eines Gensets kann zwar mit dem erfindungsgemäßen Verfahren kombiniert werden. Das erfindungsgemäße Verfahren geht aber von einem bereits angefahrenen Genset aus.

Bei dem erfindungsgemäßen Verfahren ist das lokale Wechselstromnetz nicht mit einem übergeordneten Versorgungsnetz verbunden, das eine Frequenz einer Wechselspannung des Wechselstromnetzes vorgibt.

Das erfindungsgemäße Verfahren kann nicht nur zum vorübergehenden Notbetrieb eines lokalen Wechselstromnetzes, das normalerweise aus einem übergeordneten Versorgungsnetz versorgt wird, d. h. bei Ausfall des übergeordneten Versorgungsnetzes, sondern auch zum Betrieb eines lokalen Wechselstromnetzes als Inselnetz, bei dem das Genset zur dauerhaften Stromversorgung vorgesehen ist, durchgeführt werden.

### STAND DER TECHNIK

Die Kombination einer USV, die einen Energiespeicher aufweist, und eines Genets mit einer Brennkraftmaschine und einem Generator ist bekannt, um eine langfristige Notstromversorgung eines normalerweise aus einem übergeordneten Versorgungsnetz versorgten lokalen Wechselstromnetzes sicherzustellen. Der Energiespeicher der USV kann zum Beispiel eine Batterie, ein an eine elektrische Maschine angekoppeltes Schwungrad oder einen sonstigen kurzfristig verfügbaren Energiespeicher aufweisen, um Energie zu speichern. Mit dieser Energie wird das lokale Wechselstromnetz bei Ausfall des übergeordneten Versorgungsnetzes so lange versorgt, bis die Brennkraftmaschine des Gensets angelaufen ist und die Stromversorgung übernimmt. So wird ein zwischenzeitliches Einbrechen der Wechselspannung des lokalen Wechselstromnetzes verhindert.

Ein bekanntes, Droop genanntes Verfahren dient zum Abstimmen der von einzelnen Wechselstromquellen in ein lokales Wechselstromnetz abgegebenen Leistungen, wenn dieses von einem übergeordneten Versorgungsnetz getrennt ist oder es sich bei diesem um ein Inselnetz handelt. In jeder Wechselstromquelle wird aus einer Kennlinie, die mit der von der Wechselstromquelle aktuell abgegebenen Leistung abfällt, ein Sollwert für die Frequenz der in dem lokalen Wechselstromnetz von allen Wechselstromquellen gemeinsam bereitgestellten Wechselspannung bestimmt. Mit diesem Sollwert wird die tatsächliche Frequenz der Wechselspannung des lokalen Wechselstromnetzes als Istwert verglichen. Wenn der für die jeweilige Wechselstromquelle bestimmte Sollwert der Frequenz über dem Istwert liegt, wird die von der Wechselstromquelle in das lokale Wechselstromnetz abgegebene Leistung durch den Versuch der Wechselstromquelle erhöht, den Istwert der Frequenz auf den Sollwert anzuheben. Die mit dem Versuch der Frequenzerhöhung verbundenen Leistungssteigerung der jeweiligen Wechselstromquelle hat wegen der fallenden Frequenz-Leistungs-Kennlinie zugleich eine Absenkung des Sollwerts der Frequenz zur Folge. Auf diese Weise passt sich die Wechselstromquelle von unten an eine von dem lokalen Wechselstromnetz geforderte Leistung an. Entsprechend nähert sich eine Wechselstromquelle, die anfangs mehr als eine durchschnittliche Leistung an das lokale Wechselstromnetz abgegeben hat, von oben an die geforderte Leistung an. Bei auf die relative Leistung der einzelnen Wechselstromquellen bezogenen gleichen Kennlinien werden alle Wechselstromquellen so auf eine gleiche relative Auslastung eingeregelt. Wenn sich die von dem lokalen Wechselstromnetz geforderte Leistung stark ändert, resultieren jedoch zunächst starke Änderungen der Frequenz der Wechselspannung des lokalen Wechselstromnetzes, bis sich die Leistungen aller angeschlossenen Wechselstromquellen angepasst haben. Die Frequenzschwankungen können dabei so große Ausmaße annehmen, dass es zur Notabschaltung von Wechselstromquellen kommt, wenn diese beispielsweise als Gensets ausgebildet sind. Zudem können die Frequenzschwankungen der Wechselspannung in dem lokalen Wechselstromnetz für die daran angeschlossenen Lasten kritisch sein. Dies gilt insbesondere dann, wenn es sich um sensible Lasten, wie beispielsweise Rechneranlagen und Kommunikationsausrüstung handelt.

Auch wenn bei der Durchführung des bekannten Droop-Verfahrens eine USV mit einem Energiespeicher neben den Gensets an das lokale Wechselstromnetzes angeschlossen ist, wird die Frequenz der Wechselspannung des Wechselstromnetzes durch die Gensets gemäß ihren zusammenwirkenden abfallenden Frequenz-Leistungs-Kennlinien vorgegeben. Die USV kompensiert dabei kurzfristige Schwankungen des Leistungsbedarfs des Wechselstromnetzes durch Einspeisung von Leistung aus ihrem bzw. Aufnahme von Leistung in ihren Energiespeicher.

Weiterhin ist die Verwendung einer mit der aktuell abgegebenen Leistung abfallende Frequenz-Leistung-Kennlinie bekannt, um eine gewünschte konstante Einspeiseleistung einer Wechselstromquelle, z. B. eines Diesel-Generators, in einem Verbundnetz mit fester Frequenz seiner Wechselspannung einzustellen. Dazu wird die Frequenz-Leistung-Kennlinie in der Wechselstromquelle parallelverschoben, bis die Kennlinie bei der festen Frequenz die gewünschte Leistung vorgibt.

WO 2008/135549 A2 offenbart ein Verfahren zum Betrieb eines lokalen Wechselstromnetzes mit einem Genset sowie eine unterbrechungsfreie Stromversorgung,

### AUFGABE DER ERFINDUNG

Der Erfindung liegt die Aufgabe zugrunde, ein Verfahren zum Betrieb eines lokalen Wechselstromnetzes mit den Merkmalen des Oberbegriffs des unabhängigen Patentanspruchs 1 und eine zur Durchführung eines solchen Verfahrens geeignete USV mit den Merkmalen des Oberbegriffs des Vorrichtungsanspruchs 8 aufzuzeigen, mit denen ein Zusammenwirken der USV mit dem ebenfalls an das lokale Wechselstromnetz angeschlossenen Genset zur Stabilisierung der Frequenz der Wechselspannung des lokalen Wechselstromnetzes sichergestellt wird, ohne dass eine direkte Kommunikation zwischen diesen beiden Einheiten erforderlich ist.

### LÖSUNG

Die Aufgabe der Erfindung wird durch ein Verfahren mit den Merkmalen des Patentanspruchs 1 und eine USV mit den Merkmalen des Patentanspruchs 8 gelöst. Bevorzugte Ausführungsformen des erfindungsgemäßen Verfahrens und der erfindungsgemäßen USV sind in den abhängigen Patentansprüchen definiert.

### BESCHREIBUNG DER ERFINDUNG

Bei einem erfindungsgemäßen Verfahren zum Betrieb eines lokalen Wechselstromnetzes mit einem Genset, das eine Brennkraftmaschine und einen Generator aufweist, und einer unterbrechungsfreien Stromversorgung (USV), die einen Energiespeicher umfasst, wird das Genset auf eine Sollfrequenz geregelt, indem mit dem Genset auf Abweichungen einer Frequenz einer Wechselspannung des Wechselstromnetzes von der Sollfrequenz in einer Richtung mit einer Leistungssteigerung und in der anderen Richtung mit einer Leistungsreduktion geantwortet wird. Die Frequenz der an dem Genset anliegenden Wechselspannung des Wechselstromnetzes wird mit der USV vorgegeben. Wenn ein aktueller Leistungsbedarf über ein aktuelles Leistungsangebot in dem Wechselstromnetz ansteigt, wird die mit der USV vorgegebene Frequenz der Wechselspannung in einer Richtung von einer Sollfrequenz der Wechselspannung weg geändert. Üblicherweise erfolgt diese Änderung zu niedrigeren Frequenzen hin. Wenn der aktuelle Leistungsbedarf unter das aktuelle Leistungsangebot in dem Wechselstromnetz fällt, wird hingegen die mit der USV vorgegebene Frequenz der Wechselspannung in der anderen Richtung von der Sollfrequenz der Wechselspannung weg geändert, d. h. im Regelfall zu höheren Frequenzen hin. Beim Ansteigen des Leistungsbedarfs des Wechselstromnetzes wird die Änderung der mit der USV vorgegebenen Frequenz der Wechselspannung in der einen Richtung auf einen Maximalwert begrenzt, indem fehlende Leistung vorübergehend aus dem Energiespeicher in das Wechselstromnetz eingespeist wird. Die Frequenz der mit der USV vorgegebenen Wechselspannung bleibt aber danach zumindest so lange in der einen Richtung gegenüber der Sollfrequenz verschoben, bis keine Leistung aus dem Energiespeicher mehr in das Wechselstromnetz fließt. Das Genset wird dabei fortwährend auf die Sollfrequenz geregelt.

Bei dem erfindungsgemäßen Verfahren gibt die USV die Frequenz der Wechselspannung des Wechselstromnetzes vor, die an dem Genset anliegt. Beim Vorgeben der Frequenz fängt die USV stärkere Anstiege des Leistungsbedarfs in Bezug auf die daraus resultierenden Änderungen der Frequenz soweit ab, dass sich auch Lastsprünge in dem Wechselstromnetz nur als allmähliche Lastzunahmen auf das Genset auswirken und dass insbesondere keine so großen Frequenzschwankungen der Wechselspannung des lokalen Wechselstromnetzes auftreten, dass es zu einer Notabschaltung des Gensets oder Störungen an das Wechselstromnetz angeschlossener Lasten kommt. Hierzu speist die USV aus ihrem Energiespeicher vorübergehend eine größere elektrische Leistung, d. h. zunächst die volle Differenz zwischen der schon bisher von dem Genset eingespeisten und der aktuell verbrauchten Leistung, in das lokale Wechselstromnetz ein, und senkt diese Einspeisung dann langsam ab. Die von der USV in der einen Richtung hervorgerufene gemäßigte Änderung der Frequenz der Wechselspannung in dem lokalen Wechselstromnetz bleibt im Gegenzug zumindest so lange erhalten, bis keine Leistung aus dem Energiespeicher der USV mehr in das Wechselstromnetz fließt. Sie kann sogar noch darüber hinaus anhalten, bis der Energiespeicher wieder in Richtung seines Ausgangsladezustands aufgeladen wird. Dieses Aufladen des Energiespeichers wird dann beim Erreichen des Ausgangsladezustands durch ein vorübergehendes Verschieben der mit der USV vorgegebenen Frequenz der Wechselspannung in dem lokalen Wechselstromnetz in der anderen Richtung beendet, um die Einspeisung der Leistung durch das Genset auf den Leistungsbedarf des Wechselstromnetzes zu reduzieren.

Das Wiederaufladen des Energiespeichers auf seinen Ausgangsladezustand kann auch erst dann erfolgen, wenn bei einem Abfangen einer sprunghaften Abnahme des Leistungsbedarfs des Wechselstromnetzes die Änderung der mit der USV vorgegebenen Frequenz der Wechselspannung in der anderen Richtung auf ein anderen Maximalwert begrenzt wird, indem überschüssige Leistung vorübergehend aus dem Wechselstromnetz in den Energiespeicher eingespeist wird. In diesem Fall bleibt die mit der USV vorgegebene Frequenz der Wechselspannung anschließend zumindest so lange in der anderen Richtung gegenüber der Sollfrequenz verschoben, bis keine Leistung aus dem Wechselstromnetz mehr in den Energiespeicher fließt. Dieser zusätzliche Schritt des erfindungsgemäßen Verfahrens kann aber auch ausgehend von dem Ausgangsladezustand des Energiespeichers durchgeführt werden, wenn der Ausgangsladezustand eine Kapazität zur Aufnahme zusätzlicher Leistung in den Energiespeicher belässt.

In diesem Fall ist es sinnvoll, dass die mit der USV vorgegebene Frequenz der Wechselspannung so lange in der anderen Richtung gegenüber der Sollfrequenz verschoben bleibt, bis der Energiespeicher wieder in Richtung seines Ausladezustands entladen wird. Dieses Entladen kann dann beim Erreichen des Ausgangsladezustands durch ein vorübergehendes Verschieben der mit der USV vorgegebenen Frequenz der Wechselspannung gegenüber der Sollspannung in der einen Richtung beendet werden. Auf diese Weise wird nach jedem erfindungsgemäßen Abgeben von elektrischer Leistung aus dem Energiespeicher oder Aufnehmen von elektrischer Leistung in den Energiespeicher der Energiespeicher wieder in seinen Ausgangsladezustand gebracht, um ihn für das nächste Aufnehmen oder Ausgeben von elektrischer Leistung zu präparieren.

Der Maximalwert, auf den die Änderung der mit der USV vorgegebenen Frequenz in der einen Richtung beschränkt wird, bzw. der andere Maximalwert, auf den die Änderung der Frequenz in der anderen Richtung beschränkt wird, kann eine maximale Differenz zwischen der Frequenz und der Sollfrequenz definieren. Beispielsweise kann die Änderung der mit der USV vorgegebenen Frequenz gegenüber der Sollfrequenz auf unter 10 %, insbesondere auf nicht mehr als 5 %, wie beispielsweise auf 4 % der Sollfrequenz beschränkt werden. D. h. der Maximalwert und der andere Maximalwert können deutlich kleiner gewählt werden als eine maximale Frequenzänderung, die ein kommerzielles Genset toleriert, bevor es notabgeschaltet wird, und die bei beispielsweise 15 % der Sollfrequenz liegt. So wird mit dem erfindungsgemäßen Verfahren nicht nur ein Notabschalten des Gensets verhindert, sondern die Frequenz wird darüber hinaus in engeren Grenzen stabil gehalten. Diese Stabilität der Frequenz führt zu einer deutlich geringeren Belastung des Gensets durch Volllastaufschaltungen und Lastabwürfe und schont die an das lokale Wechselstromnetz angeschlossenen Lasten.

Der Maximalwert und/oder der andere Maximalwert, auf den die Änderung der mit der USV vorgegebenen Frequenz in der einen bzw. der anderen Richtung von der Sollfrequenz begrenzt wird, kann auch eine maximale Änderungsrate der mit der USV vorgegebenen Frequenz definieren. Beispielsweise kann er definieren, dass sich die Frequenz der Wechselspannung um nicht mehr als 1 % der Sollfrequenz pro Sekunde in der einen oder anderen Richtung ändert. Insbesondere kann diese Begrenzung der Änderungsrate der mit der USV vorgegebenen Frequenz zusätzlich zu der Begrenzung der Differenz zwischen der Frequenz und der Sollfrequenz durch den Maximalwert und/oder den anderen Maximalwert definiert werden.

Bis auf ihr Vorzeichen, d. h. von ihrem Betrag her, können alle Komponenten des Maximalwerts, auf den die Änderung der mit der USV vorgegebenen Frequenz in der einen Richtung beschränkt wird, und des anderen Maximalwerts, auf den die Änderung der mit der USV vorgegebenen Frequenz in der anderen Richtung beschränkt wird, trotz ihrer Bezeichnung als "einer" und "anderer" Maximalwert gleich sein. Dies muss aber nicht der Fall sein.

Konkret kann das erfindungsgemäße Verfahren dadurch umgesetzt werden, dass jede Differenz zwischen dem Leistungsbedarf und dem Leistungsangebot in dem Wechselstromnetz mit der USV durch Transfer von Leistung zwischen dem Wechselstromnetz und dem Energiespeicher ausgeglichen wird, wobei die mit der USV vorgegebene Frequenz der Wechselspannung des Wechselstromnetzes auf einen von der zwischen dem Wechselstromnetz und dem Energiespeicher fließenden Leistung abhängigen Wert eingestellt wird. Die Frequenz der Wechselspannung des Wechselstromnetzes wird mit der USV fest vorgegeben. Dabei ist der Wert, auf dem die Frequenz der Wechselspannung mit der USV gehalten wird, von Betrag und Richtung der zwischen dem Wechselstromnetz und dem Energiespeicher fließenden Leistung abhängig. Diese Abhängigkeit ist bei dem erfindungsgemäßen Verfahren allerdings auch begrenzt, weil die Änderung der Frequenz der Wechselspannung in dem lokalen Wechselstromnetz auf den Maximalwert bzw. den anderen Maximalwert begrenzt ist. Hieraus ergibt sich eine den Verlauf der von der USV eingestellten Frequenz über der zwischen dem Energiespeicher und dem Wechselstromnetz fließenden Leistung anzeigende Kennlinie der USV, die zwischen einem Plateau bei einem maximalen Wert der Frequenz und einem Plateau bei einem minimalen Wert der Frequenz stetig verläuft und dabei streng monoton fällt. Im Regelfall fällt die Kennlinie von einem Leistungsfluss in den Energiespeicher zu einem Leistungsfluss aus dem Energiespeicher hin ab.

Von einer Frequenz-Leistungs-Kennlinie bei einem Droop-Verfahren unterscheidet sich die Frequenz-Leistungs-Kennlinie der USV bei einem erfindungsgemäßen Verfahren dadurch, dass nicht durch Änderung der Leistung versucht wird, eine Abweichung zwischen der aus der Kennlinie resultierenden Frequenz von der Istfrequenz der Wechselspannung des Wechselstromnetzes auszugleichen, sondern die Frequenz der Wechselspannung des Wechselstromnetzes mit der USV abhängig von der zwischen dem Energiespeicher und dem Wechselstromnetz fließenden Leistung fest vorgegeben wird. Dabei kann die Leistung sowohl aus dem Energiespeicher als auch in den Energiespeicher fließen, d. h. die Leistung der USV kann nicht nur positiv sondern auch negativ sein. Zudem weist die Frequenz-Leistungs-Kennlinie der USV bei einem erfindungsgemäßen Verfahren die beiden Plateaus an den beiden Enden der Kennlinie auf, die es bei einer Frequenz-Leistungs-Kennlinie bei einem Droop-Verfahren nicht gibt.

Bei einem Leistungsfluss von null gibt die Frequenz-Leistungs-Kennlinie der USV die Sollfrequenz an. Diese Sollfrequenz ist im Allgemeinen die Nennfrequenz des Wechselstromnetzes, in Mitteleuropa also 50 Hz, und damit fest. Es liegt jedoch auch im Rahmen der vorliegenden Erfindung, dass mehrere an das Wechselstromnetz angeschlossene Gensets den Leistungsbedarf des Wechselstromnetzes nach einem Droop-Verfahren untereinander aufteilen. Dann ist beispielsweise die Frequenz, die bei dieser Aufteilung des aktuellen Leistungsbedarfs des Wechselstromnetzes aus der in aller Regel flach abfallenden Frequenz-Leistungs-Kennlinie der Gensets resultiert, die Sollfrequenz. Diese Sollfrequenz kann von der USV aus dem Leistungsbedarf des Wechselstromnetzes und der abfallenden Frequenz-Leistungs-Kennlinie der Gensets berechnet oder empirisch aus dem Frequenzverhalten des Wechselstromnetzes bestimmt werden. Dann kann die Frequenz-Leistungs-Kennlinie der USV so verschoben werden, dass sie bei dem Leistungsfluss von null die aktuelle Sollfrequenz angibt.

Die Frequenz der Wechselspannung des Wechselstromnetzes, die mit der USV vorgegeben wird, kann neben der durch die Frequenz-Leistungs-Kennlinie wiedergegebenen Abhängigkeit von der zwischen dem Energiespeicher und dem Wechselstromnetz fließenden Leistung auch von einer Differenz zwischen einem Ladezustand des Energiespeichers und seinem Ausgangsladezustand abhängen, um den Ausgangsladezustand immer wieder kurzfristig zu erreichen, weil dies Voraussetzung dafür ist, sowohl Energie aus dem Energiespeicher abgeben als auch Energie in den Energiespeicher aufnehmen zu können.

Konkret kann ein Leistungssollwert für den Energiespeicher bei dem erfindungsgemäßen Verfahren aus zwei Signalen zusammengesetzt werden. Einem Ausgangssignal eines Frequenzreglers der USV, das für den Leistungssollwert dominant ist, und einem Ausgangssignal eines Laderegler des Energiespeichers, der darauf abzielt, den Ladezustand des Energiespeichers wieder auf den gewünschten Ausgangsladezustand zu bringen. Dabei hat es sich als praktikabel erwiesen, nur das Ausgangssignal des Frequenzreglers als Leistungswert für die Frequenz-Leistungs-Kennlinie zu benutzen. Wenn dann das Ausgangssignal des Ladereglers anzeigt, dass der Energiespeicher geladen werden soll, führt die Leistungsaufnahme des Energiespeichers zu einem kleinen Einbruch der Frequenz der Wechselspannung des Wechselstromnetzes, auf den der Frequenzregler mit seinem Ausgangssignal reagiert, um diesen Einbruch der Frequenz zu kompensieren. Das geänderte Ausgangssignal des Frequenzreglers führt dann über die Frequenz-Leistungs-Kennlinie dazu, das die USV eine niedrigere Frequenz vorgeben und die Gensets entsprechend mehr Leistung abgeben, so dass dann, wenn die Frequenz wieder der Sollfrequenz entspricht, der Energiespeicher geladen wird.

Bei einer erfindungsgemäßen USV ist die Steuerung so ausgebildet, dass sie mit der USV das erfindungsgemäße Verfahren durchführt. Wenn mehrere parallel geschaltete USV mit Energiespeicher vorhanden sind, können diese mit einer einheitlichen Steuerung versehen werden, die die Leistungen der einzelnen USV aufeinander abstimmt, d. h. die einzelnen USV bezüglich ihrer Leistungsabgabe bzw. Leistungsaufnahme miteinander synchronisiert. Dies ist aber nicht erforderlich. Vielmehr reichen gleiche Frequenz-Leistungs-Kennlinien der einzelnen USV aus, um deren Leistungsabgaben- und leistungsaufnahmen zu koordinieren. Dies gilt selbst dann, wenn mehrere USV zwar eingangsseitig zusammen mit einem oder mehreren Gensets an dasselbe Wechselstromnetz angeschlossen sind, ausgangsseitig aber an ansonsten getrennte Teilnetze angeschlossen sind. Wenn dann ein Lastsprung in einem Teilnetz von der zugehörigen USV abgefangen wird, werden an diesem Abfangen über das gemeinsame eingangsseitige Wechselstromnetz auch die anderen USV beteiligt, da diese der Änderung der Frequenz des Wechselstromnetzes mit der zugehörigen USV durch ein Einspeisen von elektrischer Energie aus ihren Energiespeichern oder ein Aufnehmen von elektrischer Energie in ihre Energiespeicher entgegen wirken. Auf diese Weise erfolgt eine Aufteilung der aktuell in allen über die USV an das Wechselstromnetz angeschlossenen Teilnetzen fehlenden oder überschüssigen Leistung auf die Gesamtheit der USV.

Für den Betrieb der einen oder der mehreren USV ist es unerheblich, ob an das lokale Wechselstromnetz ein oder mehrere Gensets angeschlossen sind. Der Betrieb der USV nach dem erfindungsgemäßen Verfahren hängt auch nicht davon ab, wie die Gensets an das lokale Wechselstromnetz angeschlossen sind. Sie können beispielsweise parallel zu der oder den USV und den Lasten an das Wechselstromnetz angeschlossen sein. Die USV kann dabei zwischen ein übergeordnetes Versorgungsnetz und das eigentliche lokale Wechselstromnetz geschaltet sein, wobei ein Trennschalter vorgesehen ist, um die USV eingangsseitig von dem übergeordneten Versorgungsnetz zu trennen. Alternativ können das oder die Gensets auf der den zu versorgenden Lasten abgekehrten Eingangsseite einer oder mehrerer USV angeordnet und auf diese Weise der bzw. den USV vorgelagert sein. Dann wird beim Ausfall des übergeordneten Versorgungsnetzes auf der Eingangsseite der USV von dem übergeordneten Versorgungsnetz auf die Gensets umgeschaltet.

Die USV kann bzw. können die zu versorgenden Lasten als sogenannte Online-USV galvanisch von den ihnen vorgelagerten Gensets trennen. Dies hat auf das erfindungsgemäße Verfahren keine Auswirkung, so lange die Wechselspannung auf der Eingangsseite der USV dieselbe Frequenz wie auf der Ausgangsseite der USV hat. Bei sogenannten Double Conversion USV, die eine Frequenz ihrer ausgangsseitigen Wechselspannung unabhängig von einer Frequenz ihrer eingangsseitigen Wechselspannung vorgeben, kommt es für die vorliegende Erfindung auf die Frequenz der Wechselspannung an, die auch an dem oder den Genset(s) anliegt. Da Genset(s) Double Conversion USV sinnvoller Weise vorgelagert werden, wird typischerweise die Frequenz der eingangsseitigen Wechselspannung mit der oder den Double Conversion USV erfindungsgemäß vorgegeben.

Mit Wechselstromnetz wird in dieser Anmeldung generell die Gesamtheit etwaiger über die USV leistungsmäßig verbundener Teilnetze bezeichnet, an die das oder die Gensets einerseits und die versorgten Lasten andererseits angeschlossen sind. Die erfindungsgemäß von der oder den USV vorgegebene Frequenz der Wechselspannung ist dabei immer diejenige des Teilnetzes, an das das bzw. die Gensets angeschlossen sind. Die USV kann bzw. können darüber hinaus auch eine andere, vorzugsweise konstante Frequenz einer anderen Wechselspannung eines anderen Teilnetzes des Wechselstromnetzes vorgeben, an das die Lasten angeschlossen sind.

Bei dem Energiespeicher der USV handelt es sich notwendiger Weise um einen schnellen Energiespeicher, d. h. um einen solchen, der einen schnellen Transfer von elektrischer Energie, d. h. kurzfristige Entnahme und Einspeisung großer Leistungen erlaubt. Die Anforderungen an den Energiespeicher sind dabei aber keine anderen, als sie auch sonst an den Energiespeicher einer USV gestellt werden. Der Energiespeicher kann beispielsweise eine Batterie, einschließlich einer Kondensatorbatterie, oder ein an einen Rotor einer elektrischen Maschine gekoppeltes Schwungrad aufweisen, wobei diese elektrische Maschine Teil der USV ist. Unabhängig von dem Aufbau ihres Energiespeichers kann die USV als sogenannte rotierende USV oder als sogenannte statische USV ausgebildet sein.

In einer konkreten Ausführungsform der erfindungsgemäßen USV weist deren Steuerung einen Frequenzregler für die von der USV vorgegebene Frequenz der Wechselspannung des Wechselstromnetzes auf, die an dem Anschluss für das Genset (6) anliegt, wobei der Frequenzregler ein erstes Sollleistungsteilsignal ausgibt. Weiterhin weist die Steuerung einen Laderegler zum Einhalten eines vorgegebenen Ladezustands des Energiespeichers auf, wobei der Laderegler ein zweites Sollleistungsteilsignal ausgibt. Dabei ist eine Zeitkonstante des Ladereglers länger als eine Zeitkonstante des Frequenzreglers, so dass der Frequenzregler gegenüber dem Laderegler dominant ist. Ein Addierer der Steuerung addiert das erste Sollleistungsteilsignal und das zweites Sollleistungsteilsignal zu einem Sollleistungssignal für den Energiespeicher; und ein Frequenzsteller zum Einstellen der vorgegebene Frequenz tut dies nur auf Basis des ersten Sollleistungsteilsignals, typischerweise unter Anwendung der bereits erläuterten Kennlinie.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Genset die Rede ist, ist dies so zu verstehen, dass genau ein Genset, zwei Gensets oder mehr Gensets vorhanden sind. Diese Merkmale können durch andere Merkmale ergänzt werden oder die einzigen Merkmale sein, aus denen das jeweilige Erzeugnis oder Verfahren besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert ein lokales Wechselstromnetz mit parallel geschalteten USV, die eingangsseitig an ein übergeordnetes Versorgungsnetz angeschlossen ist, wobei die USV beim Ausfall des übergeordneten Versorgungsnetzes ebenfalls eingangsseitig aus Gensets gespeist werden.
- **Fig. 2**: zeigt ein lokales Wechselstromnetz, das über parallel geschaltete USV an ein übergeordnetes Versorgungsnetz angeschlossen ist, wobei mehrere Gensets direkt an das lokale Wechselstromnetz angeschlossen sind, um dieses beim Ausfall des übergeordneten Versorgungsnetzes längerfristig mit elektrischer Leistung zu versorgen.
- **Fig. 3**: zeigt (a) das Zuschalten einer Last zu dem lokalen Wechselstromnetz gemäß Fig. 1 oder Fig. 2; (b) die Leistungsänderung der USV und der Gensets infolge der Zuschaltung der Last gemäß (a) bei dem erfindungsgemäßen Verfahren, wobei mit gestrichelter Linie die Änderung der Leistung der Gensets ohne das erfindungsgemäße Verfahren aufgetragen ist; und (c) die resultierende Änderung der Frequenz der Wechselspannung des Wechselstromnetzes bei dem erfindungsgemäßen Verfahren, wobei mit gestrichelter Linie die Frequenzänderung ohne das erfindungsgemäße Verfahren aufgetragen ist.
- **Fig. 4**: zeigt (a) die von den USV gemäß Fig. 3(b) in das lokale Wechselstromnetz eingespeiste Leistung; und (b) die resultierende Änderung der Frequenz der Wechselspannung des lokalen Wechselstromnetzes.
- **Fig. 5**: zeigt die in der Steuerung der USV hinterlegte Frequenz-Leistungs-Kennlinie, die zu dem Verhalten gemäß Fig. 4 führt; und
- **Fig. 6**: skizziert eine mögliche Ausführungsform einer Steuerung einer erfindungsgemäßen USV.

### FIGURENBESCHREIBUNG

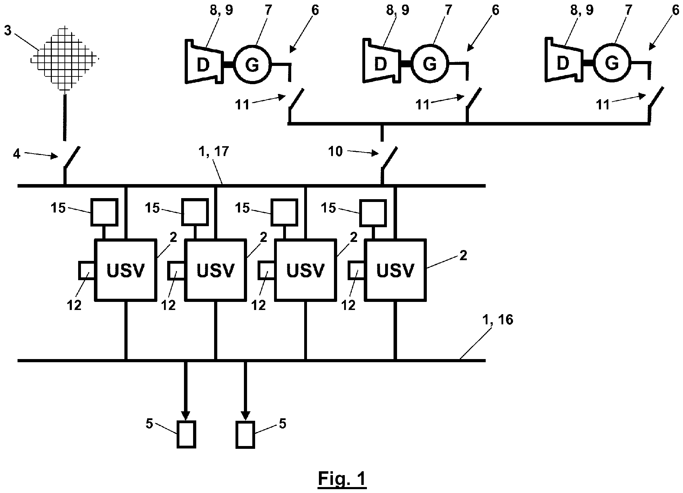

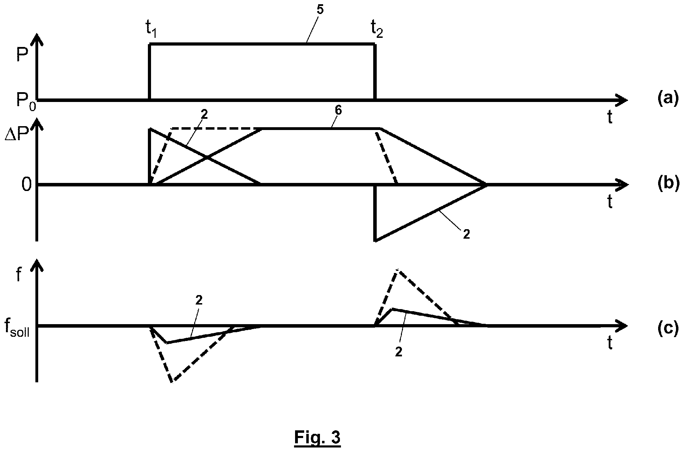

**Fig. 1** zeigt ein lokales Wechselstromnetz 1, das an ein übergeordnetes Versorgungsnetz 3 angeschlossen ist. Ein Trennschalter 4 ist vorgesehen, um das Wechselstromnetz 1 beim Ausfall des Versorgungsnetzes 3 von dem Versorgungsnetz 3 zu trennen. Das Wechselstromnetz 1 ist in ein Teilnetz 16 und ein Teilnetz 17 unterteilt, die über mehrere parallel geschaltete USV 2 miteinander verbunden sind. Die USV 2 umfassen jeweils einen Energiespeicher 15. An das Teilnetz 16 sind zu versorgende Lasten 15 angeschlossen. Das Teilnetz 17 ist über den Trennschalter 4 mit dem Versorgungsnetz 3 und über einen weiteren Schalter 10 mit mehreren Gensets 6 verbunden. Die Gensets 6 sind zur Ersatzversorgung der Lasten 5 vorgesehen, wenn das Versorgungsnetz ausfällt. Die Gensets 6 umfassen jeweils einen Generator 7 und eine Brennkraftmaschine 8 in Form eines Dieselmotors 9. Die Gensets 6 werden den USV 2 nach dem Öffnen des Trennschalters 4 über den Schalter 10 zugeschaltet, wobei jedem Genset 6 ein zusätzlicher Trennschalter 11 zugeordnet ist. Die Gensets 6 sind gemäß Fig. 1 auf derselben Seite der USV 2 wie das Versorgungsnetz 3 angeordnet, d. h. an dasselbe Teilnetz 17 angeschlossen und damit den USV 2 in Bezug auf das Teilnetz 16 vorgelagert, an das die Lasten 5 angeschlossen sind. Jede der parallel geschalteten USV 2 ist mit einer Steuerung 12 ausgestattet, deren Funktion anhand der Fig. 3 bis 5 näher erläutert werden wird. Die Gensets 6 werden einzeln auf eine für alle Gensets 6 gleiche Sollfrequenz geregelt, wobei sie die von ihnen abgegebene Leistung erhöhen, wenn die von den USV 2 vorgegebene Frequenz der an ihrem jeweiligen Ausgang anliegenden Wechselspannung des Teilnetzes 17 unterhalb der Sollfrequenz liegt. Wenn die Frequenz dieser Wechselspannung des Teilnetzes 17 über der Sollfrequenz liegt, reduziert das jeweilige Genset 6 hingegen die von ihm abgegebene Leistung. Die Frequenz der Wechselspannung des Teilnetzes 16 kann von den USV 2, wenn diese als Double Conversion USV ausgebildet sind, unabhängig von der Frequenz der Wechselspannung des Teilnetzes 17 vorgegeben werden.

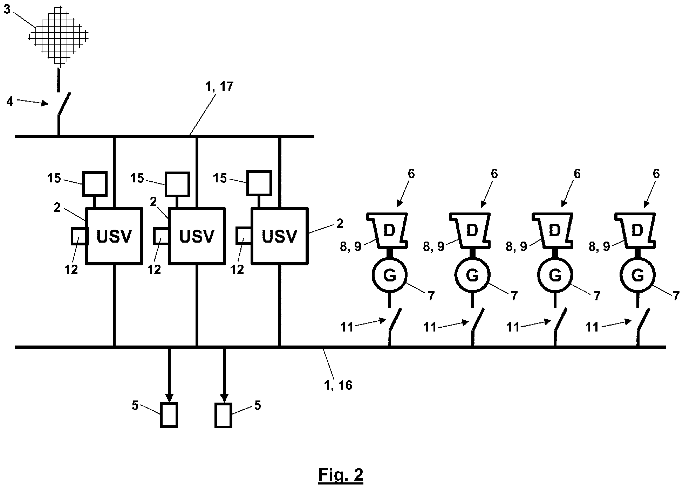

**Fig. 2** zeigt eine andere Anordnung der Gensets 6 als Fig. 1. Gemäß Fig. 2 sind die Gensets 6 nicht den USV 2 vorgelagert, sondern jeweils über ihren Trennschalter 11 lastseitig der USV an dasselbe Teilnetz 16 des Wechselstromnetzes 1 angeschlossen wie die Lasten 5. Auch hier wirken die Steuerungen 12 auf die USV 2 ein; und die Gensets 6 werden jeweils getrennt und unabhängig von den Steuerungen 12 und voneinander auf die Sollfrequenz geregelt, wie dies im Zusammenhang mit Fig. 1 beschrieben wurde. Dabei ist aber die Frequenz der Wechselspannung des Wechselstromnetzes 1, die von den USV 2 vorgegeben wird und die der Regelung des Gensets zugrunde liegt, diejenige des Teilnetzes 16.

Während die Fig. 1 und 2 jeweils eine Grundversorgung des lokalen Wechselstromnetzes 1 durch das übergeordnete Versorgungsnetz 3 darstellen, kann es sich bei dem lokalen Wechselstromnetz 1 auch um ein Inselnetz handeln, das seine Grundversorgung aus den Gensets 6 bezieht. In jedem Fall werden die Gensets 6, während sie betrieben werden, um elektrische Leistung in das Wechselstromnetz 1 einzuspeisen, erfindungsgemäß mit Hilfe der USV 2 stabilisiert, wie jetzt im Detail erläutert werden wird.

**Fig. 3(a)** illustriert das Zuschalten einer Last 5 zu dem Wechselstromnetz 1 zum Zeitpunkt t₁ und das Abschalten derselben Last zum Zeitpunkt t₂. Dadurch ändert sich der Leistungsbedarf des Wechselstromnetzes 1, d. h. die von dem Wechselstromnetz 1 abgenommene elektrische Leistung, von einem Grundwert P₀ zunächst durch einen sprunghaften Anstieg bei t₁ und dann durch einen sprunghaften Abfall bei t₂ zurück auf Po. Gemäß **Fig. 3(b)** wird der sprunghafte Anstieg ebenso wie der sprunghafte Abfall zunächst durch eine ebenso sprunghafte Leistungsabgabe zum Zeitpunkt t₁ bzw. Leistungsaufnahme zum Zeitpunkt t₂ durch die USV 2 kompensiert. Die Leistungsabgabe wird anschließend an t₁ bzw. die Leistungsaufnahme wird anschließend an t₂ über einen längeren Zeitraum zurückgeführt, über den hinweg die von den Gensets 6 bereitgestellte Leistung an den zusätzlichen Bedarf bzw. den abnehmenden Bedarf des Wechselstromnetzes 1 an elektrischer Leistung angepasst wird. Mit gestrichelter Linie zeigt Fig. 3(b) den Verlauf der elektrischen Leistung der Gensets 6, der sich ohne die Stabilisierung durch die USV 2 ergäbe. Dieser Verlauf ist deutlich steiler und dennoch nicht ausreichend, um die gemäß Fig. 3(a) zugeschaltete Last 5 sofort vollständig auszugleichen. **Fig. 3(c)** zeigt die mit den USV 2 vorgegebene Frequenz f, mit der der Verlauf der elektrischen Leistung von den Gensets 6 gemäß Fig. 3(b) hervorgerufen wird. Die Frequenzänderung mit der Zeit ist dabei sowohl was ihre maximale Steigung oder Änderungsrate als auch ihren Maximalwert anbelangt, deutlich reduziert. Damit wird insbesondere die Gefahr einer Notabschaltung der Gensets 6 aufgrund eines Einbrechens der Frequenz der Wechselspannung des Wechselstromnetzes 1 verhindert. Darüber hinaus werden die Gensets 6 stark geschont, weil sie weder Volllastaufschaltungen noch harten Lastabwürfen unterworfen werden, wie sie mit gestrichelten Linien in Fig. 3 für den Fall skizziert sind, dass die Frequenz f nicht durch die USV stabilisiert wird.

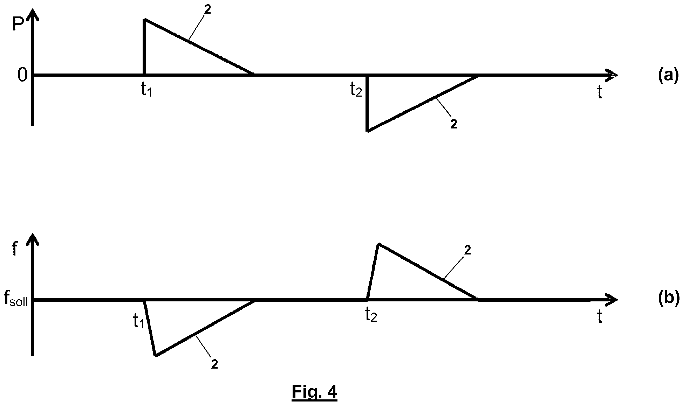

**Fig. 4** zeigt noch einmal im vergrößerten Maßstab die bereits Fig. 3(b) und 3(c) gezeigten Verläufe (a) der von den USV 2 in das Wechselstromnetz 1 eingespeisten elektrischen Leistung bzw. (b) der dabei von der USV 2 vorgegebene Frequenz f. Die USV 2 übernehmen zum Zeitpunkt t₁ schlagartig die Versorgung der dem Wechselstromnetz 1 zugeschalteten Last 5 und übergeben diese dann über einen längeren Zeitraum an die Gensets 6, wozu sie die Frequenz f mit begrenzter Änderungsrate absenken, bis eine der Einspeiseleistung der USV 2 entsprechende Absenkung der Frequenz f erreicht ist, und diese Absenkung der Frequenz f dann wieder mit der ansteigenden Einspeiseleistung der Gensets 6 und der entsprechend kleiner werdenden Einspeiseleistung der USV 2 kontinuierlich bis auf die Sollfrequenz f_{Soll} zurückführen. Die Sollfrequenz f_{Soll} wird wieder erreicht, wenn das Genset 6 die Versorgung der zugeschalteten Last vollständig übernommen hat. Entsprechend verhält es sich beim Abschalten der Last. Zum Zeitpunkt t₂ wird die dann überschüssige Leistung schlagartig von den USV 2 übernommen, und mit begrenzter Änderung der mit den USV 2 vorgegebenen Frequenz wird die Leistung der Gensets 6 nachfolgend an den geänderten Leistungsbedarf des Wechselstromnetzes 1 angepasst.

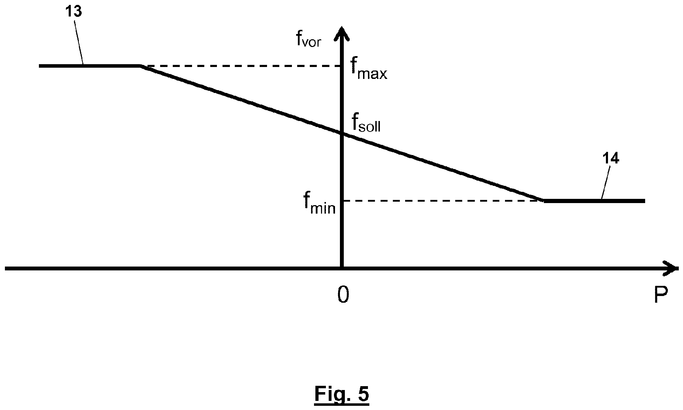

**Fig. 5** zeigt die in allen Steuerungen 12 der USV 2 hinterlegte Frequenz-Leistungs-Kennlinie. Dabei ist die Frequenz fᵥₒᵣ, die von der USV 2 vorgegeben wird, über der Leistung P aufgetragen, die zum kurzfristigen Ausgleichen der Leistungsbilanz in dem Wechselstromnetz 1 aus den Energiespeichern 15 der USV 2 fließt. D. h. eine positive Leistung P entspricht einem Energiefluss aus den Energiespeichern 15 und eine negative Leistung P entspricht einem Energiefluss in die Energiespeicher 15. Die in Fig. 5 gezeigte Kennlinie fällt streng monoton, im vorliegenden Beispiel linear, zwischen einem Plateau 13 bei einem maximalen Wert fₘₐₓ der Frequenz fᵥₒᵣ und einem Plateau 14 bei einem minimalen Wert fₘᵢₙ der Frequenz f, wobei der Wert f(P) gemäß der Kennlinie bei einer Leistung P = 0 gleich der Sollfrequenz f_{Soll} ist. D. h. bei Abgabe von Leistung durch die USV 2 setzen diese die von ihnen festgelegte Frequenz fᵥₒᵣ der Wechselspannung des Wechselstromnetzes 1, die auch bei den vorgeschalteten Gensets 6 gemäß Fig. 1 an deren Ausgängen anliegt, solange herab, bis abhängig von der ausgegebenen Leistung P der minimale Wert fₘᵢₙ erreicht ist. Dabei wird, was Fig. 5 nicht wiedergibt, aber aus den Fig. 3(c) und 4(b) zu entnehmen ist, auch die Änderungsrate der Frequenz fᵥₒᵣ begrenzt. Sobald der minimale Wert fₘᵢₙ erreicht ist, wird die Frequenz f auch bei zunehmender Leistung P der USV 2 nicht weiter abgesenkt. Umgekehrt wird bei einer Leistungsaufnahme durch die USV 2 die Frequenz bis maximal auf den maximalen Wert fₘₐₓ erhöht. Auch hier kommt die Begrenzung der Änderungsrate der Frequenz fᵥₒᵣ hinzu.

Die erfindungsgemäße Stabilisierung der Gensets 6 durch die USV 2 kann auch so beschrieben werden, dass die USV 2 verhindern, dass zu- oder abgeschaltete Lasten 5 in Form von Absenkungen oder Erhöhungen der Frequenz f voll auf die Gensets 6 durchschlagen, wodurch nicht nur die Gensets 6 erheblich belastet würden, sondern auch erhebliche Frequenzschwankungen der Wechselspannung des Wechselstromnetzes 1 aufträten. Um dies umzusetzen, wird die Frequenz f der Wechselspannung des Wechselstromnetzes 1, die an den Gensets 6 anliegt, mit den USV 2 gemäß der Kennlinie gemäß Fig. 5 fest vorgegeben.

Zusätzlich kann die in den Energiespeichern 15 der USV 2 gespeicherte Energie zur Versorgung des Wechselstromnetzes 1 heran gezogen werden, bis die Gensets 6 im Falle eines Ausfalls des übergeordneten Versorgungsnetzes 3 angefahren sind. Diese Überbrückungsmöglichkeit der Zeit bis zur Belastbarkeit der Gensets 6 ist grundsätzlich bekannt, und sie kann der originäre Grund sein, die Energiespeicher 15 der USV 2 vorzusehen. Erfindungsgemäß werden die USV 2 mit ihren Energiespeichern 15 zusätzlich zur Stabilisierung der Gensets 6 und zur Minimierung deren Belastung sowie zur Stabilisierung der Frequenz der Wechselspannung des Wechselstromnetzes 1 verwendet.

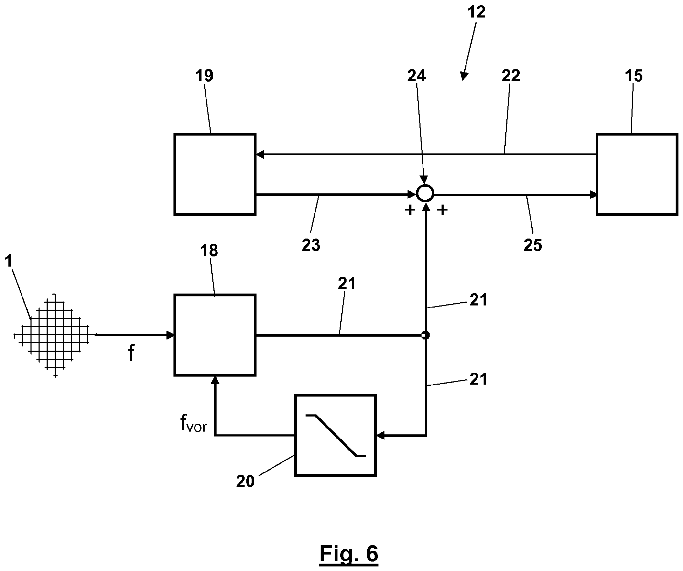

Die in **Fig. 6** skizzierte Ausführungsform der Steuerung 12 umfasst einen Frequenzregler 18 der die tatsächliche Frequenz f der Wechselspannung des Wechselstromnetzes 1 auf eine vorgegebene Frequenz fᵥₒᵣ regelt, indem er ein Sollleistungsteilsignal 21 an den Energiespeicher 15 ausgibt. Das Sollleistungsteilsignal 21 wird von einem Addierer 24 mit einem weiteren Sollleistungsteilsignal 23 von einem Laderegler 19 zu einem Sollleistungssignal 25 für den Energiespeicher 15 aufaddiert. Der Laderegler 19 dient zum Einhalten eines vorgegebenen Ladezustands des Energiespeichers 15, wozu er einen Istladezustand 22 des Energiespeichers überwacht und bei auftretenden Differenzen das Sollleistungsteilsignal 23 ausgibt. Aufgrund einer größeren Zeitkonstante des Ladereglers 19 als eine Zeitkonstante des Frequenzreglers 18 ist der letztere dominant. Auf eine kurzfristige Änderung der Leistung in dem Wechselstromnetz 1 spricht daher zunächst nur der Frequenzregler 18 an. Der Laderegler gleicht den dadurch variierenden Istladezustand 22 des Energiespeichers 15 nur längerfristig aus. Ein Frequenzsteller 20 zum Einstellen der vorgegebenen Frequenz fᵥₒᵣ tut dies auf Basis des Sollleistungsteilsignals 21 und unter Anwendung der Kennlinie gemäß Fig. 5.

### BEZUGSZEICHENLISTE

- 1: Wechselstromnetz
- 2: USV
- 3: übergeordnetes Versorgungsnetz
- 4: Trennschalter
- 5: Last
- 6: Genset
- 7: Generator
- 8: Brennkraftmaschine
- 9: Dieselmotor
- 10: Schalter
- 11: Trennschalter
- 12: Steuerung
- 13: Plateau
- 14: Plateau
- 15: Energiespeicher
- 16: Teilnetz
- 17: Teilnetz
- 18: Frequenzregler
- 19: Laderegler
- 20: Frequenzsteller
- 21: Sollleistungsteilsignal
- 22: Istladezustand
- 23: Sollleistungsteilsignal
- 24: Addierer
- 25: Sollleistungssignal
- f: Frequenz
- P: Leistung
- f_{Soll}: Sollfrequenz
- fₘᵢₙ: minimaler Wert der Frequenz f
- fₘₐₓ: maximaler Wert der Frequenz f
- fᵥₒᵣ: vorgegebene Frequenz
- P₀: Grundwert der Leistung P

## Patentansprüche

1. Verfahren zum Betrieb eines lokalen Wechselstromnetzes (1) mit einem Genset (6), das eine Brennkraftmaschine (8) und einen Generator (7) umfasst, und einer unterbrechungsfreien Stromversorgung (USV) (2), die einen Energiespeicher (15) umfasst,
- wobei mit dem Genset (6) auf Abweichungen einer Frequenz (f) einer Wechselspannung des Wechselstromnetzes (1) von einer Sollfrequenz (f_{Soll}) in einer Richtung mit einer Leistungssteigerung und in der anderen Richtung mit einer Leistungsreduktion geantwortet wird und
- wobei bei einem Ansteigen des Leistungsbedarfs des Wechselstromnetzes (1) fehlende Leistung (P) vorübergehend aus dem Energiespeicher (15) in das Wechselstromnetz (1) eingespeist wird,
**dadurch gekennzeichnet,**
- **dass** die Frequenz (f) der an dem Genset (6) anliegenden Wechselspannung des Wechselstromnetzes (1) mit der USV (2) vorgegeben wird,
- wobei die mit der USV (2) vorgegebene Frequenz (f) der Wechselspannung in der einen Richtung von der Sollfrequenz (f_{Soll}) weg geändert wird, wenn ein aktueller Leistungsbedarf über ein aktuelles Leistungsangebot in dem Wechselstromnetz (1) ansteigt, und in der anderen Richtung geändert wird, wenn der aktuelle Leistungsbedarf unter das aktuelle Leistungsangebot in dem Wechselstromnetz (1) fällt,
- wobei beim Ansteigen des Leistungsbedarfs des Wechselstromnetzes (1) die Änderung der mit der USV (2) vorgegebenen Frequenz (f) der Wechselspannung in der einen Richtung auf einen Maximalwert begrenzt wird, indem die fehlende Leistung (P) vorübergehend aus dem Energiespeicher (15) in das Wechselstromnetz (1) eingespeist wird,
- wobei die mit der USV (2) vorgegebene Frequenz (f) der Wechselspannung zumindest so lange in der einen Richtung gegenüber der Sollfrequenz (f_{Soll}) verschoben bleibt, bis keine Leistung (P) aus dem Energiespeicher (15) mehr in das Wechselstromnetz (1) fließt.

2. Verfahren nach Anspruch 1, **dadurch gekennzeichnet, dass** die mit der USV (2) vorgegebene Frequenz (f) der Wechselspannung so lange in der einen Richtung gegenüber der Sollfrequenz (f_{Soll}) verschoben bleibt, bis der Energiespeicher (15) wieder in Richtung seines Ausgangsladezustands aufgeladen wird.

3. Verfahren nach Anspruch 1 oder 2, **dadurch gekennzeichnet, dass** beim Zurückgehen des Leistungsbedarfs des Wechselstromnetzes (1) die Änderung der mit der USV (2) vorgegebenen Frequenz (f) der Wechselspannung in der anderen Richtung auf einen anderen Maximalwert begrenzt wird, indem überschüssige Leistung (P) vorübergehend aus dem Wechselstromnetz (1) in den Energiespeicher (15) eingespeist wird, wobei die mit der USV (2) vorgegebene Frequenz (f) der Wechselspannung zumindest so lange in der anderen Richtung gegenüber der Sollfrequenz (f_{Soll}) verschoben bleibt, bis keine Leistung (P) aus dem Wechselstromnetz (1) mehr in den Energiespeicher (15) fließt, wobei die mit der USV (2) vorgegebene Frequenz (f) der Wechselspannung optional so lange in der anderen Richtung gegenüber der Sollfrequenz (f_{Soll}) verschoben bleibt, bis der Energiespeicher (15) wieder in Richtung seines Ausgangsladezustands entladen wird.

4. Verfahren nach einem der vorhergehenden Ansprüche, **dadurch gekennzeichnet, dass** der Maximalwert und/oder der andere Maximalwert eine maximale Differenz zwischen der mit der USV (2) vorgegebenen Frequenz (f) und der Sollfrequenz (f_{Soll}) und/oder eine maximale Änderungsrate der mit der USV (2) vorgegebenen Frequenz (f) definiert.

5. Verfahren nach einem der vorhergehenden Ansprüche, **dadurch gekennzeichnet, dass** jede Differenz zwischen dem Leistungsbedarf und dem Leistungsangebot in dem Wechselstromnetz (1) mit der USV (2) durch Transfer von Leistung (P) zwischen dem Wechselstromnetz (1) und dem Energiespeicher (15) ausgeglichen wird, wobei die mit der USV (2) vorgegebene Frequenz (f) der Wechselspannung des Wechselstromnetzes (1) auf einen von der zwischen dem Wechselstromnetz (1) und dem Energiespeicher (15) fließenden Leistung (P) abhängigen Wert eingestellt wird.

6. Verfahren nach Anspruch 5, **dadurch gekennzeichnet, dass** eine die Abhängigkeit der mit der USV (2) vorgegebenen Frequenz (f) von der zwischen dem Wechselstromnetz (1) und dem Energiespeicher (15) fließenden Leistung (P) anzeigende Kennlinie der USV (2) einen stetigen Verlauf zwischen einem Plateau (13) bei einem maximalen Wert (fₘₐₓ) der mit der USV (2) vorgegebenen Frequenz (f) und einem Plateau (14) bei einem minimalen Wert (fₘᵢₙ) der mit der USV (2) vorgegebenen Frequenz (f) aufweist, wobei die Kennlinie optional von einer in den Energiespeicher (15) zu einer aus dem Energiespeicher (15) fließenden Leistung (P) hin abfällt.

7. Verfahren nach einem der Ansprüche 5 und 6, **dadurch gekennzeichnet, dass** der Wert, auf den die mit der USV (2) vorgegebene Frequenz (f) der Wechselspannung des Wechselstromnetzes (1) eingestellt wird, weiterhin von einer Differenz zwischen einem Ladezustand des Energiespeichers (15) und seinem Ausgangsladezustand abhängig ist.

8. Unterbrechungsfreie Stromversorgung (USV) (2) zur Durchführung des Verfahrens nach einem der vorhergehenden Ansprüche, mit
- einem Energiespeicher (15),
- mindestens einem Anschluss zum Einbinden der USV (2) in ein Wechselstromnetz (1) und zum Anschießen eines Gensets (6) in dem Wechselstromnetz an die USV (2) und
- einer Steuerung (12), die so ausgebildet ist, dass die USV (2) bei einem Ansteigen des Leistungsbedarfs in dem Wechselstromnetz (1) fehlende Leistung (P) vorübergehend aus dem Energiespeicher (15) in das Wechselstromnetz (1) eingespeist,
**dadurch gekennzeichnet,**
- **dass** die Steuerung (12) so ausgebildet ist, dass die USV (2) eine Frequenz (f) einer Wechselspannung des Wechselstromnetzes (1) vorgibt, die an dem Anschluss für das Genset (6) anliegt,
- wobei die Steuerung (12) so ausgebildet ist, dass sie die mit der USV (2) vorgegebene Frequenz (f) der Wechselspannung in einer Richtung von einer Sollfrequenz (f_{Soll}) der Wechselspannung weg ändert, wenn ein aktueller Leistungsbedarf über ein aktuelles Leistungsangebot in dem Wechselstromnetz (1) ansteigt, und in der anderen Richtung ändert, wenn der aktuelle Leistungsbedarf unter das aktuelle Leistungsangebot in dem Wechselstromnetz (1) fällt,
- wobei die Steuerung (12) so ausgebildet ist, dass sie beim Ansteigen des Leistungsbedarfs des Wechselstromnetzes (1) die Änderung der mit der USV (2) vorgegebenen Frequenz (f) der Wechselspannung in der einen Richtung auf einen Maximalwert begrenzt, indem sie die fehlende Leistung (P) vorübergehend aus dem Energiespeicher (15) in das Wechselstromnetz (1) einspeist, wobei die Steuerung (12) so ausgebildet ist, dass sie die mit der USV (2) vorgegebene Frequenz (f) der Wechselspannung zumindest so lange in der einen Richtung gegenüber der Sollfrequenz (f_{Soll}) verschoben hält, bis keine Leistung (P) aus dem Energiespeicher (15) mehr in das Wechselstromnetz (1) fließt.

9. USV (2) nach Anspruch 8, **dadurch gekennzeichnet, dass** die Steuerung (12) so ausgebildet ist, dass sie die mit der USV (2) vorgegebene Frequenz (f) der Wechselspannung so lange in der einen Richtung gegenüber der Sollfrequenz (f_{Soll}) verschoben hält, bis der Energiespeicher (15) wieder einen Ausgangsladezustand erreicht hat.

10. USV (2) nach Anspruch 8 oder 9, **dadurch gekennzeichnet, dass** die Steuerung (12) so ausgebildet ist, dass sie beim Zurückgehen des Leistungsbedarfs des Wechselstromnetz (1) die Änderung der mit der USV (2) vorgegebenen Frequenz (f) der Wechselspannung in der anderen Richtung auf einen anderen Maximalwert begrenzt, indem sie überschüssige Leistung (P) vorübergehend aus dem Wechselstromnetz (1) in den Energiespeicher (15) einspeist, wobei die Steuerung (12) so ausgebildet ist, dass sie die mit der USV (2) vorgegebene Frequenz (f) der Wechselspannung zumindest so lange in der anderen Richtung gegenüber der Sollfrequenz (f_{Soll}) verschoben hält, bis keine Leistung (P) aus dem Wechselstromnetz (1) mehr in den Energiespeicher (15) fließt, wobei die Steuerung (12) optional so ausgebildet ist, dass sie die mit der USV (2) vorgegebene Frequenz (f) der Wechselspannung so lange in der anderen Richtung gegenüber der Sollfrequenz (f_{Soll}) verschoben hält, bis der Energiespeicher (15) wieder seinen Ausgangsladezustand erreicht hat.

11. USV (2) nach einem der Ansprüche 8 bis 10, **dadurch gekennzeichnet, dass** der Maximalwert und/oder der andere Maximalwert eine maximale Differenz zwischen der mit der USV (2) vorgegebenen Frequenz (f) und der Sollfrequenz (f_{Soll}) und/oder eine maximale Änderungsrate der mit der USV (2) vorgegebenen Frequenz (f) definiert.

12. USV (2) nach einem der Ansprüche 8 bis 11, **dadurch gekennzeichnet, dass** die Steuerung (12) so ausgebildet ist, dass sie jede Differenz zwischen dem Leistungsbedarf und dem Leistungsangebot in dem Wechselstromnetz (1) mit der USV (2) durch Transfer von Leistung (P) zwischen dem Wechselstromnetz (1) und dem Energiespeicher (15) ausgleicht, wobei die Steuerung (12) so ausgebildet ist, dass sie die mit der USV (2) vorgegebene Frequenz (f) der Wechselspannung des Wechselstromnetzes (1) auf einen von der zwischen dem Wechselstromnetz (1) und dem Energiespeicher (15) fließenden Leistung (P) abhängigen Wert einstellt.

13. USV (2) nach Anspruch 12, **dadurch gekennzeichnet, dass** eine die Abhängigkeit der mit der USV (2) vorgegebenen Frequenz (f) von der zwischen dem Wechselstromnetz (1) und dem Energiespeicher (15) fließenden Leistung (P) anzeigende Kennlinie der USV (2) zwischen einem Plateau (13) bei einem maximalen Wert (fₘₐₓ) der mit der USV (2) vorgegebenen Frequenz (f) und einem Plateau (14) bei einem minimalen Wert (fₘᵢₙ) der mit der USV (2) vorgegebenen Frequenz (f) stetig verläuft und streng monoton fällt, wobei die Kennlinie optional von einer in den Energiespeicher (15) zu einer aus dem Energiespeicher (15) fließenden Leistung (P) hin abfällt.

14. USV (2) nach einem der Ansprüche 8 bis 13, **dadurch gekennzeichnet, dass** die Steuerung (12) so ausgebildet ist, dass der Wert, auf den die Steuerung (12) die mit der USV (2) vorgegebene Frequenz (f) der Wechselspannung des Wechselstromnetzes (1) einstellt, weiterhin von einer Differenz zwischen einem Ladezustand und einem Ausgangsladezustand des Energiespeichers (15) abhängig ist.

15. USV (2) nach einem der Ansprüche 8 bis 14, **dadurch gekennzeichnet, dass** die Steuerung (12)
- einen Frequenzregler (18) für die von der USV (2) vorgegebene Frequenz (fᵥₒᵣ) der Wechselspannung des Wechselstromnetzes (1), die an dem Anschluss für das Genset (6) anliegt, wobei der Frequenzregler (18) ein erstes Sollleistungsteilsignal (21) ausgibt,
- einen Laderegler (19) zum Einhalten eines vorgegebenen Ladezustands des Energiespeichers (15), wobei der Laderegler (19) ein zweites Sollleistungsteilsignal (23) ausgibt und wobei der Laderegler (19) eine längere Zeitkonstante aufweist als der Frequenzregler (18),
- einen Addierer (24), der das erste Sollleistungsteilsignal (21) und das zweites Sollleistungsteilsignal (23) zu einem Sollleistungssignal (25) für den Energiespeicher (15) aufaddiert, und
- einen Frequenzsteller (20) zum Einstellen der vorgegebene Frequenz (f) auf Basis des ersten Sollleistungsteilsignals (21)
aufweist.

## Claims

1. Method of operating a local AC power grid (1) comprising a genset (6) which includes a combustion engine (8) and a generator (7), and an uninterruptable power supply (UPS) (2) which includes an energy storage (15),
- wherein, by means of the genset (6), it is responded to deviations of a frequency (f) of an AC voltage of the AC power grid (1) from a desired frequency (f_{Soll}) in one direction by an increase of power and in the other direction by a reduction of power, and
- wherein, in case of an increase of the power demand of the AC power grid (1), missing power (P) is temporarily fed out of the energy storage (15) into the AC power grid (1),
**characterised in**
- **that** the frequency (f) of the AC voltage of the AC power grid (1) present at the genset (6) is defined by means of the UPS (2),
- wherein the frequency (f) of the AC voltage defined by means of the UPS (2) is altered in the one direction away from the desired frequency (f_{Soll}), if a present power demand increases beyond a present power supply in the AC power grid (1), and altered in the other direction, if the present power demand falls below the present power supply in the AC power grid (1),
- wherein with increasing power demand of the AC power grid (1) the alteration of the frequency (f) of the AC voltage defined by means of the UPS (2) is limited to a maximum value in the one direction in that the missing power (P) is temporarily fed out of the energy storage (15) into the AC power grid (1),
- wherein the frequency (f) of the AC voltage defined by means of the UPS (2) remains shifted in the one direction with regard to the desired frequency (f_{Soll}) at least until no more power (P) flows out of the energy storage (15) into the AC power grid (1).

2. Method of claim 1, **characterised in that** the frequency (f) of the AC voltage defined by means of the UPS (2) remains shifted in the one direction with regard to the desired frequency (f_{Soll}) until the energy storage (15) is recharged in the direction of its starting charge state again.

3. Method of claim 1 or 2, **characterised in that** with decreasing power demand of the AC power grid (1) the alteration of the frequency (f) of the AC voltage defined by means of the UPS (2) in the other direction is limited to another maximum value **in that** excess power (P) is temporarily fed out of the AC power grid (1) into the energy storage (15), wherein the frequency (f) of the AC voltage defined by means of the UPS (2) remains shifted in the other direction with regard to the desired frequency (f_{Soll}) at least until no more power (P) flows out of the AC power grid (1) into the energy storage (15), wherein, optionally, the frequency (f) of the AC voltage defined by means of the UPS (2) remains shifted in the other direction with regard to the desired frequency (f_{Soll}) until the energy storage (15) is discharged in direction of its starting charge state again.

4. Method of any of the preceding claims, **characterised in that** the maximum value and/or the other maximum value defines a maximum difference between the frequency (f) defined by means of the UPS (2) and the desired frequency (f_{Soll}) and/or a maximum rate of alteration of the frequency (f) defined by means of the UPS (2).

5. Method of any of the preceding claims, **characterised in that** any difference between the power demand and the power supply in the AC power grid (1) is compensated for by the UPS (2) by means of transfer of power (P) between the AC power grid (1) and the energy storage (15), wherein the frequency (f) of the AC voltage of the AC power grid (1) defined by means of the UPS (2) is adjusted to a value depending on the power (P) flowing between the AC power grid (1) and the energy storage (15).

6. Method of claim 5, **characterised in that** a characteristic of the UPS (2) indicating the dependency of the frequency (f) defined by means of the UPS (2) on the power (P) flowing between the AC power grid (1) and the energy storage (15) has a steady course between a plateau (13) at a maximum value (fₘₐₓ) of the frequency (f) defined by means of the UPS (2) and a plateau (14) at a minimum value (fₘᵢₙ) of the frequency (f) defined by means of the UPS (2), wherein, optionally, the characteristic drops from a power (P) flowing in the energy storage (15) to a power (P) flowing out of the energy storage (15).

7. Method of any of the claims 5 and 6, **characterised in that** the value to which the frequency (f) of the AC voltage of the AC power grid (1) defined by means of the UPS (2) is adjusted is further dependent on a difference between a charge state of the energy storage (15) and its starting charge state.

8. Uninterruptable power supply (UPS) (2) for carrying out the method according to any of the preceding claims, comprising
- an energy storage (15),
- at least one connection for integrating the UPS (2) in an AC power grid (1) and for connecting a genset (6) in the AC power grid to the UPS (2), and
- a controller (12) which is designed such that the UPS (2), when the power demand in the AC power grid (1) increases, temporarily feeds missing power (P) out of the energy storage (15) into the AC power grid (1),
**characterised in**
- **that** the controller (12) is designed such that the UPS (2) defines a frequency (f) of an AC voltage of the AC power grid (1), which is present at the connection for the genset (6),
- wherein the controller (12) is designed such that it alters the frequency (f) of the AC voltage defined by means of the UPS (2) in one direction from a desired frequency (f_{Soll}) of the AC voltage, if a present power demand increases beyond a present power supply in the AC power grid (1), and alters the frequency (f) of the AC voltage defined by means of the UPS (2) in the other direction, if the present power demand falls below the present power supply in the AC power grid (1),
- wherein the controller (12) is designed such that it limits the alteration of the frequency (f) of the AC voltage in the one direction to a maximum value, when the power demand of the AC power grid (1) increases, in that it feeds the missing power (P) temporarily out of the energy storage (15) into the AC power grid (1), wherein the controller (12) is designed such that it keeps the frequency (f) of the AC voltage defined by means of the UPS (2) shifted with regard to the desired frequency (f_{Soll}) in the one direction at least until no more power (P) flows out of the energy storage (15) into the AC power grid (1).

9. UPS (2) of claim 8, **characterised in that** the controller (12) is designed such that it keeps the frequency (f) of the AC voltage defined by means of the UPS (2) shifted in the one direction with regard to the desired frequency (f_{Soll}) until the energy storage (15) has reached its starting charge state again.

10. UPS (2) of claim 8 or 9, **characterised in that** the controller (12) is designed such that it limits the alteration of the frequency (f) of the AC voltage defined by means of the UPS (2) in the other direction to another maximum value, when the power demand of the AC power grid (1) decreases, **in that** it feeds the excess power (P) temporarily out of the AC power grid (1) into the energy storage (15), wherein the controller (12) is designed such that it keeps the alteration of the frequency (f) of the AC voltage defined by means of the UPS (2) shifted in the other direction with regard to the desired frequency (f_{Soll}) until no more power (P) flows out of the AC power grid (1) into the energy storage (15), wherein, optionally, the controller (12) is designed such that it keeps the frequency (f) of the AC voltage defined by means of the UPS (2) shifted in the other direction with regard to the desired frequency (f_{Soll}) until the energy storage (15) has reached its starting state again.

11. UPS (2) of any of the claims 8 to 10, **characterised in that** the maximum value and/or the other maximum value defines the maximum difference between the frequency (f) defined by means of the UPS (2) and/or a maximum rate of alteration of the frequency (f) defined by means of the UPS (2).

12. UPS (2) of any of the claims 8 to 11, **characterised in that** the controller (12) is designed such that it compensates for any difference between the power demand and the power supply in the AC power grid (1) by means of the UPS (2) by a transfer of power (P) between the AC power grid (1) and the energy storage (15), wherein the controller (12) is designed such that it adjusts the frequency (f) of the AC voltage of the AC power grid (1) defined by means of the UPS (2) to a value depending on the power (P) flowing between the AC power grid (1) and the AC storage (15).

13. UPS (2) of claim 12, **characterised in that** a characteristic indicating the dependency of the frequency (f) defined by means of the UPS (2) on the power (P) flowing between the AC power grid (1) and the energy storage (15) has a steady course between a plateau (13) at a maximum value (fₘₐₓ) of the frequency (f) defined by means of the UPS (2) and a plateau (14) at a minimum value (fₘᵢₙ) of the frequency (f) defined by means of the UPS (2) and drops strictly monotonically, wherein, optionally, the characteristic drops from a power (P) flowing into the energy storage (15) to a power (P) flowing out of the energy storage (15).

14. UPS (2) of any of the claims 8 to 13, **characterised in that** the controller (12) is designed such that the value to which the controller (12) adjusts the frequency (f) of the AC voltage of the AC power grid (1) defined by means of the UPS (2) is further dependent on a difference between a charge state and a starting charge state of the energy storage (15).

15. UPS (2) of any of the claims 8 to 14, **characterised in that** the controller (12) comprises
- a frequency regulator (18) for a frequency (fᵥₒᵣ) of the AC voltage of the AC power grid (1) defined by means of the UPS (2), which is present at the connection for the genset (6), wherein the frequency regulator (18) outputs a first desired power partial signal (21),
- a charging regulator (19) for keeping a predetermined charge state of the energy storage (15), wherein the charge regulator (19) outputs a second desired power partial signal (23) and wherein the charging regulator (19) has a higher time constant than the frequency regulator (18),
- an adder (24) which adds the first desired power partial signal (21) and a second desired power partial signal (23) to a desired power signal (25) for the energy storage (15), and
- a frequency adjuster (20) for adjusting the defined frequency (f) on basis of the first desired power partial signal (21).

## Revendications

1. Procédé de fonctionnement d'un réseau à courant alternatif (1) local avec un groupe électrogène (6), qui comprend un moteur à combustion interne (8) et un générateur (7), et avec une alimentation électrique sans coupure (USV) (2) qui comprend un accumulateur d'énergie (15),
- le groupe électrogène (6) répondant à des écarts d'une fréquence (f) d'une tension alternative du réseau à courant alternatif (1) par rapport à une fréquence de consigne (fₛₒₗₗ) dans un sens par une augmentation de puissance et dans l'autre sens par une réduction de puissance, et
- la puissance (P) manquante étant, lors d'une augmentation du besoin de puissance du réseau à courant alternatif (1), injectée temporairement dans le réseau à courant alternatif (1) à partir de l'accumulateur d'énergie (15),
**caractérisé en ce que**
- la fréquence (f) de la tension alternative du réseau à courant alternatif (1) présente sur le groupe électrogène (6) est prédéfinie avec l'USV (2),
- la fréquence (f) de la tension alternative prédéfinie avec l'USV (2) est modifiée dans un sens qui l'éloigne de la fréquence de consigne (fₛₒₗₗ) quand un besoin de puissance actuel augmente en dépassant une offre de puissance actuelle dans le réseau à courant alternatif (1), et est modifiée dans l'autre sens quand le besoin de puissance actuel chute au-dessous de l'offre de puissance actuelle dans le réseau à courant alternatif (1),
- la modification de la fréquence (f) de la tension alternative prédéfinie avec l'USV (2) étant, lors de l'augmentation du besoin de puissance du réseau à courant alternatif (1), limitée dans un sens à une valeur maximale par le fait que la puissance (P) manquante est injectée temporairement dans le réseau à courant alternatif (1) à partir de l'accumulateur d'énergie (15),
- la fréquence (f) de la tension alternative prédéfinie avec l'USV (2) demeure décalée dans un sens par rapport à la fréquence de consigne (fₛₒₗₗ) jusqu'à ce qu'aucune puissance (P) ne s'écoule plus dans le réseau à courant alternatif (1) à partir de l'accumulateur d'énergie (15).

2. Procédé selon la revendication 1, **caractérisé en ce que** la fréquence (f) de la tension alternative prédéfinie avec l'USV (2) demeure décalée dans un sens par rapport à la fréquence de consigne (fₛₒₗₗ) jusqu'à ce que l'accumulateur d'énergie (15) soit de nouveau chargé dans le sens de son état de charge initial.

3. Procédé selon la revendication 1 ou 2, **caractérisé en ce que**, lors du recul du besoin de puissance du réseau à courant alternatif (1), la modification de la fréquence (f) de la tension alternative prédéfinie avec l'USV (2) est limitée dans l'autre sens à une autre valeur maximale par le fait que la puissance (P) en excès est injectée temporairement dans l'accumulateur d'énergie (15) à partir du réseau à courant alternatif (1), la fréquence (f) de la tension alternative prédéfinie avec l'USV (2) demeurant décalée dans l'autre sens par rapport la fréquence de consigne (fₛₒₗₗ) jusqu'à ce qu'aucune puissance (P) ne s'écoule plus dans l'accumulateur d'énergie (15) à partir du réseau à courant alternatif (1), la fréquence (f) de la tension alternative prédéfinie avec l'USV (2) demeurant optionnellement décalée dans l'autre sens par rapport à la fréquence de consigne (fₛₒₗₗ) jusqu'à ce que l'accumulateur d'énergie (15) soit déchargé de nouveau dans le sens de son état de charge initial.

4. Procédé selon l'une des revendications précédentes, **caractérisé en ce que** la valeur maximale et/ou l'autre valeur maximale définit une différence maximale entre la fréquence (f) prédéfinie avec l'USV (2) et la fréquence de consigne (fₛₒₗₗ) et/ou un taux de modification maximal de la fréquence (f) prédéfinie avec l'USV (2).

5. Procédé selon l'une des revendications précédentes, **caractérisé en ce que** chaque différence entre le besoin de puissance et l'offre de puissance dans le réseau à courant alternatif (1) avec l'USV (2) est compensée par un transfert de puissance (P) entre le réseau à courant alternatif (1) et l'accumulateur d'énergie (15), la fréquence (f) de la tension alternative prédéfinie avec l'USV (2) étant réglée à une valeur qui dépend de la puissance (P) s'écoulant entre le réseau à courant alternatif (1) et l'accumulateur d'énergie (15).

6. Procédé selon la revendication 5, **caractérisé en ce qu'**une courbe caractéristique de l'USV (2) indiquant la dépendance de la fréquence (f) prédéfinie avec l'USV (2) vis-à-vis de la puissance (P) s'écoulant entre le réseau à courant alternatif (1) et l'accumulateur d'énergie (15) présente une allure constante entre un plateau (13) pour une valeur maximale (fₘₐₓ) de la fréquence (f) prédéfinie avec l'USV (2) et un plateau (14) pour une valeur minimale (fₘᵢₙ) de la fréquence (f) prédéfinie avec l'USV (2), la courbe caractéristique descendant optionnellement à partir d'une puissance (P) s'écoulant dans l'accumulateur d'énergie (15) vers une puissance (P) s'écoulant à partir de l'accumulateur d'énergie (15).

7. Procédé selon l'une des revendications 5 et 6, **caractérisé en ce que** la valeur à laquelle est réglée la fréquence (f) de la tension alternative du réseau à courant alternatif (1) prédéfinie avec l'USV (2) dépend en outre d'une différence entre un état de charge de l'accumulateur d'énergie (15) et son état de charge initial.

8. Alimentation électrique sans coupure (USV) (2) destinée à la réalisation du procédé selon l'une des revendications précédentes, avec
- un accumulateur d'énergie (15),
- au moins une connexion pour l'intégration de l'USV (2) dans un réseau à courant alternatif (1) et pour la connexion à l'USV (2) d'un groupe électrogène (6) dans le réseau à courant alternatif (1), et avec
- une commande (12) qui est constituée de telle sorte que, lors d'une augmentation du besoin de puissance dans le réseau à courant alternatif (1), l'USV (2) injecte temporairement la puissance (P) manquante dans le réseau à courant alternatif (1) à partir de l'accumulateur d'énergie (15),
**caractérisée en ce que**
- la commande (12) est constituée de telle sorte que l'USV (2) prédéfinit une fréquence (f) d'une tension alternative du réseau à courant alternatif (1) qui est présente sur la connexion pour le groupe électrogène (6),
- la commande (12) étant constituée de telle sorte qu'elle modifie la fréquence (f) de la tension alternative prédéfinie avec l'USV (2) dans une direction qui l'éloigne d'une fréquence de consigne (fₛₒₗₗ) de la tension alternative quand un besoin de puissance actuel augmente en dépassant une offre de puissance actuelle dans le réseau à courant alternatif (1), et la modifie dans l'autre sens quand le besoin de puissance actuel chute au-dessous de l'offre de puissance actuelle dans le réseau à courant alternatif (1),
- la commande (12) étant constituée de telle sorte que, lors de l'augmentation du besoin de puissance du réseau à courant alternatif (1), elle limite la modification de la fréquence (f) de la tension alternative prédéfinie avec l'USV (2) dans un sens à une valeur maximale par le fait qu'elle injecte temporairement la puissance (P) manquante dans le réseau à courant alternatif (1) à partir de l'accumulateur d'énergie (15), la commande (12) étant constituée de telle sorte qu'elle maintient la fréquence (f) de la tension alternative prédéfinie avec l'USV (2) décalée dans un sens par rapport à la fréquence de consigne (fₛₒₗₗ) au moins jusqu'à ce qu'aucune puissance (P) ne s'écoule plus dans le réseau à courant alternatif (1) à partir de l'accumulateur d'énergie (15).

9. USV (2) selon la revendication 8, **caractérisée en ce que** la commande (12) est constituée de telle sorte qu'elle maintient la fréquence (f) de la tension alternative prédéfinie avec l'USV (2) décalée dans un sens par rapport à la fréquence de consigne (fₛₒₗₗ) jusqu'à ce que l'accumulateur d'énergie (15) ait atteint de nouveau un état de charge initial.

10. USV (2) selon la revendication 8 ou 9, **caractérisée en ce que** la commande (12) est constituée de telle sorte que, lors du recul du besoin de puissance du réseau à courant alternatif (1), elle limite la modification de la fréquence (f) de la tension alternative prédéfinie avec l'USV (2) dans l'autre sens à une autre valeur maximale par le fait qu'elle injecte temporairement la puissance (P) en excès dans l'accumulateur d'énergie (15) à partir du réseau à courant alternatif (1), la commande (12) étant constituée de telle sorte qu'elle maintient la fréquence (f) de la tension alternative prédéfinie avec l'USV (2) décalée dans l'autre sens par rapport à la fréquence de consigne (fₛₒₗₗ) au moins jusqu'à ce qu'aucune puissance (P) ne s'écoule plus dans l'accumulateur d'énergie (15) à partir du réseau à courant alternatif (1), la commande (12) étant optionnellement constituée de telle sorte qu'elle maintient la fréquence (f) de la tension alternative prédéfinie avec l'USV (2) décalée dans l'autre sens par rapport à la fréquence de consigne (fₛₒₗₗ) jusqu'à ce que l'accumulateur d'énergie (15) ait atteint de nouveau son état de charge initial.

11. USV (2) selon l'une des revendications 8 à 10, **caractérisée en ce que** la valeur maximale et/ou l'autre valeur maximale définit une différence maximale entre la fréquence (f) prédéfinie avec l'USV (2) et la fréquence de consigne (fₛₒₗₗ) et/ou un taux de modification maximal de la fréquence (f) prédéfinie avec l'USV (2).

12. USV (2) selon l'une des revendications 8 à 11, **caractérisée en ce que** la commande (12) est constituée de telle sorte qu'elle compense chaque différence entre le besoin de puissance et l'offre de puissance dans le réseau à courant alternatif (1) avec l'USV (2) par le transfert de puissance (P) entre le réseau à courant alternatif (1) et l'accumulateur d'énergie (15), la commande (12) étant constituée de telle sorte qu'elle règle la fréquence (f) de la tension alternative du réseau à courant alternatif (1) prédéfinie avec l'USV (2) à une valeur qui dépend de la puissance (P) s'écoulant entre le réseau à courant alternatif (1) et l'accumulateur d'énergie (15).

13. USV (2) selon la revendication 12, **caractérisée en ce qu'**une courbe caractéristique de l'USV (2) indiquant la dépendance de la fréquence (f) prédéfinie avec l'USV (2) vis-à-vis de la puissance (P) s'écoulant entre le réseau à courant alternatif (1) et l'accumulateur d'énergie (15) présente une allure constante entre un plateau (13) pour une valeur maximale (fₘₐₓ) de la fréquence prédéfinie avec l'USV (2) et un plateau (14) pour une valeur minimale (fₘᵢₙ) de la fréquence (f) prédéfinie avec l'USV (2) et descend de façon strictement monotone, la courbe caractéristique descendant optionnellement à partir d'une puissance (P) s'écoulant dans l'accumulateur d'énergie (15) vers une puissance (P) s'écoulant à partir de l'accumulateur d'énergie (15).

14. USV (2) selon l'une des revendications 8 à 13, **caractérisée en ce que** la commande (12) est constituée de telle sorte que la valeur à laquelle la commande (12) règle la fréquence (f) de la tension alternative du réseau à courant alternatif (1) prédéfinie avec l'USV (2) dépend en outre d'une différence entre un état de charge et un état de charge initial de l'accumulateur d'énergie (15).

15. USV (2) selon l'une des revendications 8 à 14, **caractérisée en ce que** la commande (12) présente
- un régulateur de fréquence (18) pour la fréquence (fᵥₒᵣ) de la tension alternative du réseau à courant alternatif (1) prédéfinie avec l'USV (2) qui est présente sur la connexion pour le groupe électrogène (6), le régulateur de fréquence (18) délivrant un premier sous-signal de puissance de consigne (21),
- un régulateur de charge (19) pour le maintien d'un état de charge prédéfini de l'accumulateur d'énergie (15), le régulateur de charge (19) délivrant un deuxième sous-signal de puissance de consigne (23), et le régulateur de charge (19) présentant une constante de temps plus longue que le régulateur de fréquence (18),
- un additionneur (24) qui additionne le premier sous-signal de puissance de consigne (21) et le deuxième sous-signal de puissance de consigne (23) pour donner un signal de puissance de consigne (25) pour l'accumulateur d'énergie (15), et
- un régleur de fréquence (20) pour le réglage de la fréquence (f) prédéfinie sur la base du premier sous-signal de puissance de consigne (21).
